# EUROPÄISCHE PATENTANMELDUNG

(11) **EP 4 156 644 A1**
(43) Veröffentlichungstag der Anmeldung: **29.03.2023**
(21) Anmeldenummer: 21199388.6
(22) Anmeldetag: 28.09.2021
(51) Int. Cl.: H04L 47/74, H04L 47/78, H04L 47/722, H04L 47/2416, H04L 47/28, H04L 47/62, H04L 47/70

(54) **VERFAHREN ZUR ÜBERMITTLUNG ZEITKRITISCHER DATEN INNERHALB EINES KOMMUNIKATIONSSYSTEMS UND KOMMUNIKATIONSSTEUERUNGSEINRICHTUNG**

(71) Anmelder: Siemens Aktiengesellschaft, 80333 München (DE)
(72) Erfinder: Höme, Stephan, 91126 Schwabach (DE); Kerschbaum, Sven, 90768 Fürth (DE)
(74) Vertreter: Siemens Patent Attorneys

(57) **Zusammenfassung**

Zur Übermittlung zeitkritischer Daten innerhalb eines Kommunikationssystems werden ausgewählte Datagramme (300) Datenströmen zugeordnet und von ersten Kommunikationsgeräten (201) zu zweiten Kommunikationsgeräten (202) über dritte Kommunikationsgeräte (101-103) umfassende Pfade übermittelt. Eine übergeordnete Kommunikationssteuerungseinrichtung (400) ermittelt jeweils einen Pfad für den jeweiligen Datenstrom und reserviert bei ausreichender Verfügbarkeit Ressourcen zur Übermittlung des jeweiligen Datenstroms über die dritten Kommunikationsgeräte. Bei Verfügbarkeit ausreichender Ressourcen konfiguriert die übergeordnete Kommunikationssteuerungseinrichtung (400) zumindest mit einem ersten oder zweiten Kommunikationsgerät verbundene dritte Kommunikationsgeräte (101, 102) jeweils dafür, dass Datenströmen zugeordnete Datagramme jeweils in für Datenströme reservierte Sende-Queues (111-112, 121-122) eingereiht werden. Bei mangelnder oder unsicherer Verfügbarkeit ausreichender Ressourcen konfiguriert die übergeordnete Kommunikationssteuerungseinrichtung (400) zumindest die mit einem ersten oder zweiten Kommunikationsgerät verbundenen dritten Kommunikationsgeräte jeweils zumindest temporär dafür, dass ausgewählten Datenströmen zugeordnete Datagramme jeweils in eine Sende-Queue (113, 123) für Datenverkehr eingereiht werden, der ohne spezifische Dienstgüte-Zusicherung behandelt wird.

## Beschreibung

Die vorliegende Erfindung betrifft ein Verfahren zur Übermittlung zeitkritischer Daten, insbesondere Steuerungsdaten in einem industriellen Automatisierungssystem, innerhalb eines Kommunikationssystems sowie eine Kommunikationssteuerungseinrichtung, die zur Durchführung des Verfahrens vorgesehen ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus WO 2020/114706 A1 ist ein Kommunikationssystem zur Übermittlung zeitkritischer Daten bekannt, bei dem ausgewählte Datagramme Datenströmen zugeordnet und über Pfade für die Datenströme übermittelt werden. Reservierungsanfragen, die jeweils zumindest Angaben zu einem ersten und zweiten Netzknoten und Dienstgüteparameter umfassen, werden zur Reservierung von durch Kommunikationsgeräte für eine Übertragung von Datenströmen bereitzustellenden Ressourcen jeweils durch eine Reservierungsfunktionskomponente, die einem ersten oder zweiten Kommunikationsendgerät oder einem mit diesem verbundenen Datagramme weiterleitenden Kommunikationsgerät zugeordnet ist, an eine übergeordnete Kommunikationssteuerungseinrichtung übermittelt. Die übergeordnete Kommunikationssteuerungseinrichtung ermittelt bei Reservierungsanfragen jeweils einen Pfad und überprüft, ob in Kommunikationsgeräten entlang des jeweiligen Pfades ausreichende Ressourcen für die Übertragung der Datenströme unter Einhaltung der spezifizierten Dienstgüteparameter verfügbar sind, und ermittelt für ausgewählte Kommunikationsgeräte eine vorgeschlagene lokale Zyklusdauer.

Auch bei einem zentral Stream-Reservierungsmodell werden Stream-Reservierungsanfragen grundsätzlich unabhängig voneinander an einen zentralen Netzwerk-Controller CNC bzw. an eine übergeordnete Kommunikationssteuerungseinrichtung übermittelt. Nach Empfang einer Stream-Reservierungsanfrage plant der zentrale Netzwerk-Controller Reservierungswünsche unmittelbar ein, sofern im jeweiligen Kommunikationssystem ausreichende Ressourcen verfügbar sind. Dies wird üblicherweise als inkrementelles Scheduling bezeichnet. Dies kann nun dazu führen, dass der zentrale Netzwerk-Controller eine Stream-Reservierungsanfrage für einen an und für sich hoch priorisierten Prozess, insbesondere einen zeitkritischen Steuerungsprozess in einem industriellen Automatisierungssystem, ablehnen muss, wenn beispielsweise nach einer Reservierung von System-Ressourcen für eine zeitunkritischere Anwendung, z.B. eine Datenanalyse-Anwendung, nicht mehr ausreichend System-Ressourcen vorhanden sind.

Der vorliegenden Erfindung liegt die Aufgabe zugrunde, ein Verfahren zur Übermittlung zeitkritischer Daten innerhalb eines Kommunikationssystems zu schaffen, das eine effiziente Ressourcenreservierung und zuverlässige Einrichtung von Datenströmen zur Übermittlung hochpriorisierter Daten ermöglicht, und geeignete Vorrichtung zur Durchführung des Verfahrens anzugeben.

Diese Aufgabe wird erfindungsgemäß durch ein Verfahren mit den in Anspruch 1 angegebenen Merkmalen und durch eine Kommunikationssteuerungseinrichtung mit den in Anspruch 15 angegebenen Merkmalen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationssystems werden ausgewählte Datagramme Datenströmen zugeordnet und von ersten Kommunikationsgeräten zu zweiten Kommunikationsgeräten über dritte Kommunikationsgeräte umfassende Pfade übermittelt. Die ersten Kommunikationsgeräte senden zur Bekanntmachung abonnierbarer Datenströme jeweils einen Datenstrom-Identifikator umfassende erste Datagramme und spezifizieren in den ersten Datagrammen Dienstgüteparameter für den jeweiligen Datenstrom. Demgegenüber senden die zweiten Kommunikationsgeräte zur Reservierung von durch die dritten Kommunikationsgeräte für eine Übermittlung der Datenströme bereitzustellenden Ressourcen jeweils zweite Datagramme und spezifizieren in diesen den jeweiligen Datenstrom-Identifikator. Auf die ersten und zweiten Datagramme ermittelt eine übergeordnete Kommunikationssteuerungseinrichtung, insbesondere ein Central Network Controller, jeweils einen Pfad für den jeweiligen Datenstrom und reserviert bei ausreichender Verfügbarkeit Ressourcen zur Übermittlung des jeweiligen Datenstroms über die dritten Kommunikationsgeräte.

Die durch insbesondere die dritten Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges. Die Datenstrom-Identifikatoren werden vorzugsweise jeweils auf eine Reservierungsanfrage eines ersten Kommunikationsgeräts durch die übergeordnete Kommunikationssteuerungseinrichtung an das jeweilige erste Kommunikationsgerät bereitgestellt. Darüber hinaus werden die Datenströme für eine Sende-Queue-Zuordnung ihrer Datagramme vorteilhafterweise jeweils durch ihren Datenstrom-Identifikator und ihre Zuordnung zu einem virtuellen lokalen Netz identifiziert, insbesondere entsprechend IEEE 802.1 CB.

Bei Verfügbarkeit ausreichender Ressourcen konfiguriert die übergeordnete Kommunikationssteuerungseinrichtung zumindest mit einem ersten oder zweiten Kommunikationsgerät verbundene dritte Kommunikationsgeräte erfindungsgemäß jeweils dafür, dass Datenströmen zugeordnete Datagramme jeweils in für Datenströme reservierte Sende-Queues eingereiht werden. Demgegenüber konfiguriert die übergeordnete Kommunikationssteuerungseinrichtung bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür, dass ausgewählten Datenströmen zugeordnete Datagramme jeweils in eine Sende-Queue für Datenverkehr eingereiht werden, der ohne spezifische Dienstgüte-Zusicherung behandelt wird. Vorteilhafterweise konfiguriert die übergeordnete Kommunikationssteuerungseinrichtung zumindest die mit einem ersten oder zweiten Kommunikationsgerät verbundenen dritten Kommunikationsgeräte jeweils durch Einträge in eine jeweilige Forwarding Database dafür, welches virtuelle lokale Netz einem Datenstrom jeweils zugeordnet wird bzw. ob bzw. mit welcher Priorität einem Datenstrom zugeordnete Datagramme jeweils in eine für Datenströme reservierte Sende-Queue eingereiht werden.

Insgesamt ermöglicht die vorliegende Erfindung, dass eine Reservierung von Ressourcen für Streams, deren Anwendungen oder zugeordnete Prozesse niedriger priorisiert sind als Anwendungen oder Prozesse, für die später Ressourcen reserviert werden sollen, vermieden wird, so dass für hoch priorisierte Anwendungen oder Prozesse eine Reservierung von Ressourcen für Streams sichergestellt werden kann. Dies ist insbesondere für eine dynamische Allokation von Ressourcen für Streams während eines Bootstrapping-Vorgangs relevant, bei dem eine Reihenfolge eines Eintreffens von Reservierungsanfragen mitunter schwer vorhersagbar ist. Somit ist es mit der vorliegenden Erfindung ausreichend, dass auf Stream-Reservierungsanfragen zunächst nur eine jeweilige Stream-ID im Kommunikationssystem bekannt gegeben, ohne dass unmittelbar Ressourcen reserviert werden. Dies kann erfindungsgemäß zu einem späteren Zeitpunkt erfolgen, wenn beispielsweise eine Übersicht sämtlicher zu berücksichtigenden Reservierungsanfragen vorliegt.

Entsprechend einer besonders bevorzugten Ausgestaltung der vorliegenden Erfindung konfiguriert die übergeordnete Kommunikationssteuerungseinrichtung bei Verfügbarkeit ausreichender Ressourcen zumindest mit einem ersten oder zweiten Kommunikationsgerät verbundene dritte Kommunikationsgeräte jeweils dafür, dass die Datenströme jeweils einem virtuellen lokalen Netz zugeordnet und Datenströmen zugeordnete Datagramme auf Basis dieser Zuordnung jeweils in die jeweilige für Datenströme reservierte Sende-Queues eingereiht werden. Bei mangelnder oder unsicherer Verfügbarkeit ausreichender Ressourcen konfiguriert die übergeordnete Kommunikationssteuerungseinrichtung zumindest die mit einem ersten oder zweiten Kommunikationsgerät verbundenen dritten Kommunikationsgeräte dagegen vorteilhafterweise jeweils zumindest temporär dafür, dass ausgewählte Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue für Datenverkehr eingereiht werden, der ohne spezifische Dienstgüte-Zusicherung behandelt wird. Damit kann durch die Zuordnung des virtuellen lokalen Netzes geändert werden, ob bzw. mit welcher Priorität einem Datenstrom zugeordnete Datagramme jeweils in eine für Datenströme reservierte Sende-Queue eingereiht werden. Daher ist es auf einfache Weise möglich, Stream-Reservierungsanfragen durch ein Umschreiben von VLAN-Prioritätswerten in Edge Bridges oder Switches je nach Netzauslastung dynamisch rauf- bzw. runterzupriorisieren.

Vorzugsweise erstellt die übergeordnete Kommunikationssteuerungseinrichtung während eines laufenden Betriebs des Kommunikationssystems zeit- bzw. ereignisgesteuert eine aktualisierte Priorisierung sämtlicher Datenströme und ermittelt anhand der aktualisierten Priorisierung sowie auf Basis aktuell verfügbarer Ressourcen, welche Datenströme zumindest temporär als ausgewählte Datenströme zu behandeln sind. Insbesondere kann die übergeordnete Kommunikationssteuerungseinrichtung zumindest die mit einem ersten oder zweiten Kommunikationsgerät verbundenen dritten Kommunikationsgeräte während eines Betriebsstarts des Kommunikationssystems jeweils dafür konfigurieren, dass zunächst sämtliche Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue für Datenverkehr eingereiht werden, der ohne spezifische Dienstgüte-Zusicherung behandelt wird. Vorteilhafterweise erstellt die übergeordnete Kommunikationssteuerungseinrichtung nach dem Betriebsstart eine Priorisierung sämtlicher Datenströme und ermittelt anhand der Priorisierung sowie auf Basis verfügbarer Ressourcen, welche Datenströme zumindest temporär als ausgewählte Datenströme zu behandeln sind. Auf diese Weise wird zumindest für hoch priorisierte Steuerungsanwendungen oder -prozesse eine zuverlässige Reservierung von Ressourcen zur Übermittlung diesen Steuerungsanwendungen oder -prozessen zugeordneter Streams sichergestellt.

Entsprechend einer besonders bevorzugten Ausgestaltung der vorliegenden Erfindung sind die Kommunikationsgeräte über ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden. Dabei wird eine Weiterleitung der ausgewählten Datagramme vorteilhafterweise mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert.

Darüber hinaus sind in den dritten Kommunikationsgeräten vorzugsweise jeweils zumindest für erste Datenströme mit erhöhten Echtzeitanforderungen reservierte Sende-Queues, für zweite Datenströme ohne erhöhte Echtzeitanforderungen reservierte Sende-Queues und Sende-Queues für Datenverkehr ohne spezifische Dienstgüte-Zusicherung, insbesondere Best-effort Datenverkehr, vorgesehen. Dabei reserviert die übergeordnete Kommunikationssteuerungseinrichtung zunächst nur für die ersten Datenströme bei ausreichender Verfügbarkeit Ressourcen zur Übermittlung des jeweiligen Datenstroms über die dritten Kommunikationsgeräte und konfiguriert die dritten Kommunikationsgeräte jeweils dafür, die zweiten Datenströme zumindest temporär als ausgewählte Datenströme, also als Best-effort Datenverkehr, zu behandeln. Vorteilhafterweise überprüft die übergeordnete Kommunikationssteuerungseinrichtung bei Verfügbarkeit ausreichender Ressourcen zur Übermittlung der ersten Datenströme über die dritten Kommunikationsgeräte, ob zur Übermittlung der zweiten Datenströme ausreichende Ressourcen verfügbar sind. Dementsprechend werden die dritten Kommunikationsgeräte jeweils dafür konfiguriert, die den zweiten Datenströmen zugeordnete Datagramme in die für die zweiten Datenströme reservierten Sende-Queues einzureihen. Somit wird eine Reservierung von Ressourcen zur Übermittlung von Datenströmen sukzessive entsprechend einer jeweils zugeordneten Datenverkehrsklasse sichergestellt.

Die erfindungsgemäße Kommunikationssteuerungseinrichtung ist zur Durchführung eines Verfahrens entsprechend vorangehenden Ausführungen vorgesehen und umfasst zumindest einen Anschluss zur Verbindung mit einem Datagramme weiterleitenden Kommunikationsgerät. Die Kommunikationssteuerungseinrichtung ist dafür ausgestaltet und eingerichtet, auf durch erste Kommunikationsgeräte gesendete erste Datagramme zur Bekanntmachung abonnierbarer Datenströme und auf durch zweite Kommunikationsgeräte gesendete zweite Datagramme zur Reservierung von durch dritte Kommunikationsgeräte für eine Übermittlung der Datenströme bereitzustellenden Ressourcen jeweils einen Pfad für den jeweiligen Datenstrom zu ermitteln und bei ausreichender Verfügbarkeit Ressourcen zur Übermittlung des jeweiligen Datenstroms über die dritten Kommunikationsgeräte zu reservieren.

Ferner ist die erfindungsgemäße Kommunikationssteuerungseinrichtung dafür ausgestaltet und eingerichtet, bei Verfügbarkeit ausreichender Ressourcen zumindest mit einem ersten oder zweiten Kommunikationsgerät verbundene dritte Kommunikationsgeräte jeweils dafür zu konfigurieren, dass Datenströmen zugeordnete Datagramme jeweils in für Datenströme reservierte Sende-Queues eingereiht werden. Außerdem ist die Kommunikationssteuerungseinrichtung dafür ausgestaltet und eingerichtet, bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür zu konfigurieren, dass ausgewählten Datenströmen zugeordnete Datagramme jeweils in eine Sende-Queue für Datenverkehr eingereiht werden, der ohne spezifische Dienstgüte-Zusicherung behandelt wird.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: ein Ablaufdiagramm für eine Reservierung von Ressourcen zur Übermittlung von Datenströmen innerhalb des Kommunikationssystems gemäß Figur 1.

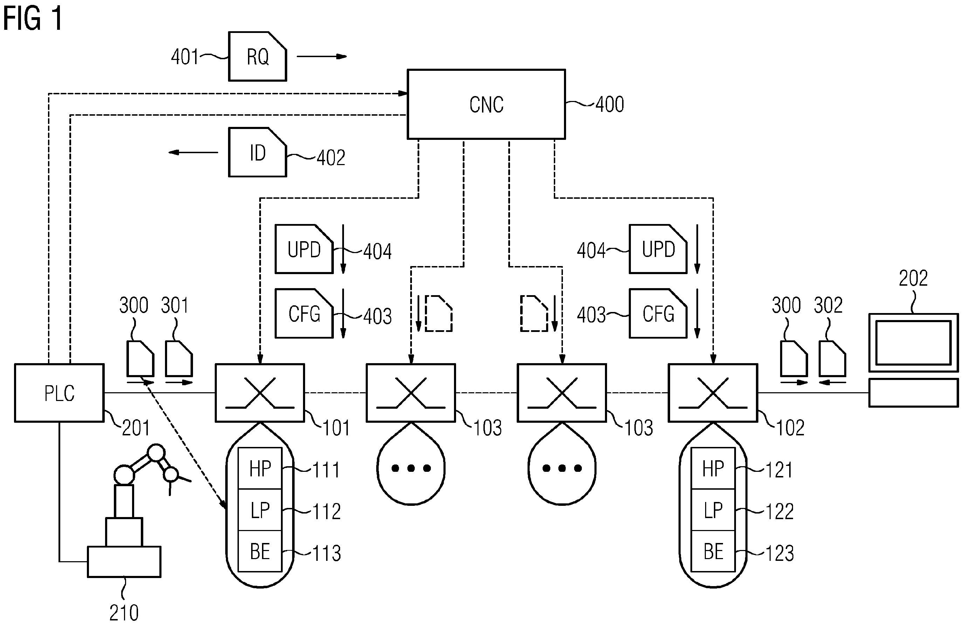

Das in Figur 1 dargestellte Kommunikationssystem für ein industrielles Automatisierungssystem weist mehrere Bridges oder Switches 101-103 als Datagramme weiterleitende Kommunikationsgeräte und eine diesen zugeordnete übergeordnete Steuerungseinrichtung bzw. einen zentralen Netzwerk-Controller (Central Network Controller) 400 auf. Die Bridges bzw. Switches 101-103 umfassen jeweils mehrere Ports sowie einen Backplane-Switch als Koppelelement und dienen insbesondere zum Anschluss von speicherprogrammierbaren Steuerungen 201, Bedien- und Beobachtungsstationen 202, I/O-Controllern oder I/O-Modulen, die ebenfalls Kommunikationsgeräte bzw. Kommunikationsendgeräte darstellen. Im vorliegenden Ausführungsbeispiel ist das Kommunikationssystem als Time-Sensitive Network ausgestaltet, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von Datenrahmen (Frames) innerhalb des Kommunikationssystems kann beispielsweise mittels Frame Preemption gemäß IEEE 802.1Q-2018, Time-Aware Shaper gemäß IEEE 802.1Q-2018, Credit-Based Shaper gemäß IEEE 802.1Q-2018, Burst Limiting Shaper, Peristaltic Shaper bzw. Priority-Based Shaper gesteuert werden.

Speicherprogrammierbare Steuerungen 201 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Mittels erster Kommunikations- bzw. Automatisierungsgeräte, die insbesondere eine Talker- oder Provider Funktion haben, werden Informationen bzw. Dienste über Datenströme zur Nutzung an zweiten Kommunikations- bzw. Automatisierungsgeräten bereitgestellt, die insbesondere eine Listener- oder Consumer-Funktion haben. Einem Automatisierungsgerät kann gleichzeitig sowohl eine oder mehrere Talker-Funktionen als auch eine oder mehrere Listener-Funktionen haben, beispielsweise wenn es einerseits Automatisierungsdienste bereitstellt und andererseits Automatisierungsdienste anderer Geräte nutzt.

Die speicherprogrammierbare Steuerung 201 kann beispielsweise Messwerte liefern und somit eine Talker-Funktion haben. Dagegen kann die Bedien- und Beobachtungsstation 202 eine Listener-Funktion aufweisen und insbesondere durch die speicherprogrammierbare Steuerung 201 bereitgestellte Informationen empfangen. Grundsätzlich könnte die Bedien- und Beobachtungsstation 202 von der speicherprogrammierbaren Steuerung 201 empfangene Informationen analysieren und hieraus Steuerungsparameter für die speicherprogrammierbare Steuerung 201 vorgeben. Somit können sowohl die speicherprogrammierbare Steuerung 201 als auch die Bedien- und Beobachtungsstation 202 beide Funktionen wahrnehmen. Daher werden Datenströme auf Reservierungsanfragen vorzugsweise jeweils bidirektional eingerichtet.

Zur Übermittlung zeitkritischer Daten werden zumindest ausgewählte Datenrahmen (Frames) 300 Datenströmen zugeordnet und zwischen ersten Kommunikationsgeräten 201 mit Talker-Funktion und zweiten Kommunikationsgeräten 202 mit Listener-Funktion über die Bridges bzw. Switches 101-103 umfassende Pfade übermittelt. Im vorliegenden Ausführungsbeispiel stellt die speicherprogrammierbare Steuerung 201 ein erstes Kommunikationsgerät mit Talker-Funktion dar, während die Bedien- und Beobachtungsstation 202 ein zweites Kommunikationsgerät mit Listener Funktion darstellt. Die Bridges bzw. Switches 101-103 stellen Datagramme weiterleitende dritte Kommunikationsgeräte dar.

Erste Kommunikationsgeräte, wie die speicherprogrammierbare Steuerung 201, senden zur Bekanntmachung abonnierbarer Datenströme jeweils einen Datenstrom-Identifikator umfassende erste Datagramme 301 senden und spezifizieren in den ersten Datagrammen 301 Dienstgüteparameter für den jeweiligen Datenstrom. Der Datenstrom-Identifikator wird dem jeweiligen ersten Kommunikationsgerät auf eine an einen zentralen Netzwerk-Controller 400 gerichtete Stream-Reservierungsanfrage 401 mittels einer Nachricht 402 mitgeteilt, die den Datenstrom-Identifikator umfasst.

Zweite Kommunikationsgeräte, wie die Bedien- und Beobachtungsstation 202, senden zur Reservierung von durch die Bridges bzw. Switches 101-103 für eine Übermittlung der Datenströme bereitzustellenden Ressourcen jeweils zweite Datagramme 302 und spezifizieren in diesen den jeweiligen Datenstrom-Identifikator. Die durch die Bridges bzw. Switches 101-103 bereitzustellenden Ressourcen umfassen insbesondere nutzbare Übertragungszeitfenster, Bandbreite, zugesicherte maximale Latenz, Queue-Anzahl, Queue-Cache bzw. Adress-Cache.

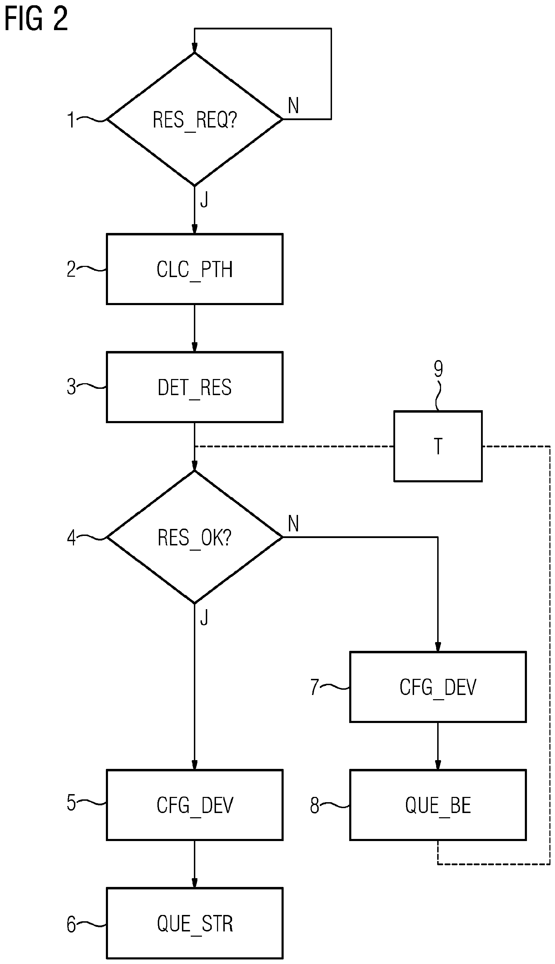

Entsprechend Schritt 1 des in Figur 2 dargestellten Ablaufdiagramms überprüft der zentrale Netzwerk-Controller 400 fortlaufend, ob basierend auf vorliegenden ersten 301 und zweiten Datagrammen 302 Reservierungsforderungen zu erfüllen sind. Bei Reservierungsforderungen ermittelt der zentrale Netzwerk-Controller 400 auf die ersten 301 und zweiten Datagramme 302 jeweils einen Pfad für den jeweiligen Datenstrom (Schritt 2). Außerdem ermittelt der der zentrale Netzwerk-Controller 400 entsprechend Schritt 3 erforderliche Ressourcen zur Übermittlung des jeweiligen Datenstroms über die Bridges bzw. Switches 101-103. Anschließend überprüft der zentrale Netzwerk-Controller 400, ob ausreichende Ressourcen zur Übermittlung des jeweiligen Datenstroms über die Bridges bzw. Switches 101-103 verfügbar sind (Schritt 4). Ist dies der Fall, reserviert zentrale Netzwerk-Controller 400 die erforderlichen Ressourcen.

Insbesondere konfiguriert der zentrale Netzwerk-Controller 400 bei Verfügbarkeit ausreichender Ressourcen zumindest den mit der speicherprogrammierbaren Steuerung 201 verbundenen Switch 101 und den mit der Bedien- und Beobachtungsstation 202 verbundenen Switch 102 jeweils dafür (Schritt 5), dass Datenströmen zugeordnete Datenrahmen 300 jeweils in für Datenströme reservierte Sende-Queues 111-112, 121-122 der Switches 101, 102 eingereiht werden (Schritt 6). Hierzu übermittelt der zentrale Netzwerk-Controller 400 Nachrichten 403 mit entsprechenden Konfigurationsdaten an die Switches 101, 102.

In entsprechender Weise können auch die übrigen Switches 103 entlang des jeweils ermittelten Pfads konfiguriert werden.

Bei mangelnder oder unsicherer Verfügbarkeit ausreichender Ressourcen konfiguriert der zentrale Netzwerk-Controller 400 zumindest den mit der speicherprogrammierbaren Steuerung 201 verbundenen Switch 101 und den mit der Bedien- und Beobachtungsstation 202 verbundenen Switch 102 jeweils dafür (Schritt 7), dass ausgewählten Datenströmen zugeordnete Datenrahmen 300 jeweils in eine Sende-Queue 113, 123 für Datenverkehr eingereiht werden (Schritt 8), der ohne spezifische Dienstgüte-Zusicherung behandelt wird. Diese Sende-Queue-Zuordnung für die den ausgewählten Datenströmen zugeordneten Datenrahmen kann entsprechend Schritt 9 nach Ablauf einer definierten Zeitdauer bzw. ereignisbasiert geändert werden, insbesondere wenn wieder ausreichende Ressourcen verfügbar sind.

Im vorliegenden Ausführungsbeispiel sind in den Switches 101-103 jeweils zumindest für erste Datenströme mit erhöhten Echtzeitanforderungen reservierte Sende-Queues 111, 121, für zweite Datenströme ohne erhöhte Echtzeitanforderungen reservierte Sende-Queues 112, 122 und Sende-Queues 113, 123 für Best-effort Datenverkehr vorgesehen. Vorzugsweise reserviert der zentrale Netzwerk-Controller 400 - beispielsweise bei einem Systemstart - zunächst nur für die ersten Datenströme bei ausreichender Verfügbarkeit Ressourcen zur Übermittlung des jeweiligen Datenstroms über die Switches 101-103 und konfiguriert die Switches 101-103 jeweils dafür, die zweiten Datenströme zumindest temporär als ausgewählte Datenströme zu behandeln. Zumindest temporär werden die den zweiten Datenströmen zugeordneten Datenrahmen in diesem Fall also als Best-effort Datenverkehr behandelt und dementsprechend in die Sende-Queues 113, 123 eingereiht.

Bei Verfügbarkeit ausreichender Ressourcen zur Übermittlung der ersten Datenströme über die die Switches 101-103 kann der zentrale Netzwerk-Controller 400 vorteilhafterweise nachfolgend überprüfen, ob zur Übermittlung der zweiten Datenströme ausreichende Ressourcen verfügbar sind. Dementsprechend werden die Switches 101-103 jeweils dafür konfiguriert, die den zweiten Datenströmen zugeordnete Datagramme in die für die zweiten Datenströme reservierten Sende-Queues 112, 122 einzureihen.

Entsprechend einer bevorzugten Ausführungsvariante konfiguriert der zentrale Netzwerk-Controller 400 die Switches 101-103 bei Verfügbarkeit ausreichender Ressourcen jeweils dafür, dass die Datenströme jeweils einem virtuellen lokalen Netz (VLAN) zugeordnet und Datenströmen zugeordnete Datagramme auf Basis dieser Zuordnung jeweils in die jeweilige für Datenströme reservierte Sende-Queues 111-112, 121-122 eingereiht werden. Darüber hinaus konfiguriert der zentrale Netzwerk-Controller 400 die Switches 101-103 in dieser Ausführungsvariante bei mangelnder oder unsicherer Verfügbarkeit ausreichender Ressourcen jeweils zumindest temporär dafür, dass ausgewählte Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue für Datenverkehr eingereiht werden, der ohne spezifische Dienstgüte-Zusicherung bzw. als Best-effort Datenverkehr behandelt wird.

Vorteilhafterweise kann durch die Zuordnung des virtuellen lokalen Netzes einfach und zuverlässig geändert werden, ob bzw. mit welcher Priorität einem Datenstrom zugeordnete Datagramme jeweils in eine für Datenströme reservierte Sende-Queue eingereiht werden. Der zentrale Netzwerk-Controller 400 sendet hierzu Nachrichten 404 mit aktualisierten Konfigurationsdaten an jeweils von einer solchen Änderung betroffene Switches 101-103. Mittels der Nachrichten 403, 404 mit den Konfigurationsdaten bzw. aktualisierten Konfigurationsdaten konfiguriert der zentrale Netzwerk-Controller 400 die Switches 101-103 jeweils durch Einträge in eine jeweilige Forwarding Database (FDB) dafür, welches virtuelle lokale Netz einem Datenstrom jeweils zugeordnet wird bzw. ob bzw. mit welcher Priorität einem Datenstrom zugeordnete Datagramme jeweils in eine für Datenströme reservierte Sende-Queue eingereiht werden. Für eine Sende-Queue-Zuordnung ihrer Datenrahmen 300 werden die Datenströme vorzugsweise jeweils durch ihren Datenstrom-Identifikator und ihre Zuordnung zu einem virtuellen lokalen Netz identifiziert, insbesondere entsprechend IEEE 802.1 CB.

Der zentrale Netzwerk-Controller 400 kann beispielsweise während eines laufenden Betriebs des Kommunikationssystems zeit- bzw. ereignisgesteuert eine aktualisierte Priorisierung sämtlicher Datenströme erstellen und anhand der aktualisierten Priorisierung sowie auf Basis aktuell verfügbarer Ressourcen ermitteln, welche Datenströme zumindest temporär als ausgewählte Datenströme bzw. als Best-effort Datenverkehr zu behandeln sind. Insbesondere kann der zentrale Netzwerk-Controller 400 die Switches 101-103 während eines Betriebsstarts des Kommunikationssystems jeweils dafür konfigurieren, dass zunächst sämtliche Datenströme jeweils einem virtuellen lokalen Netz zugeordnet werden, anhand dessen Zuordnung dem jeweiligen ausgewählten Datenstrom zugeordnete Datenrahmen 300 jeweils in die jeweilige Sende-Queue 113, 123 für Best-effort Datenverkehr eingereiht werden. Nach dem Betriebsstart erstellt der zentrale Netzwerk-Controller 400 eine Priorisierung sämtlicher Datenströme und ermittelt anhand der Priorisierung sowie auf Basis verfügbarer Ressourcen, welche Datenströme zumindest temporär als Best-effort Datenverkehr zu behandeln sind.

## Patentansprüche

1. Verfahren zur Übermittlung zeitkritischer Daten innerhalb eines Kommunikationssystems, bei dem
- ausgewählte Datagramme (300) Datenströmen zugeordnet und von ersten Kommunikationsgeräten (201) zu zweiten Kommunikationsgeräten (202) über dritte Kommunikationsgeräte (101-103) umfassende Pfade übermittelt werden,
- die ersten Kommunikationsgeräte zur Bekanntmachung abonnierbarer Datenströme jeweils einen Datenstrom-Identifikator umfassende erste Datagramme (301) senden und in den ersten Datagrammen Dienstgüteparameter für den jeweiligen Datenstrom spezifizieren,
- die zweiten Kommunikationsgeräte zur Reservierung von durch die dritten Kommunikationsgeräte für eine Übermittlung der Datenströme bereitzustellenden Ressourcen jeweils zweite Datagramme (302) senden und in diesen den jeweiligen Datenstrom-Identifikator spezifizieren,
- eine übergeordnete Kommunikationssteuerungseinrichtung (400) auf die ersten und zweiten Datagramme jeweils einen Pfad für den jeweiligen Datenstrom ermittelt und bei ausreichender Verfügbarkeit Ressourcen zur Übermittlung des jeweiligen Datenstroms über die dritten Kommunikationsgeräte reserviert,
- die übergeordnete Kommunikationssteuerungseinrichtung (400) bei Verfügbarkeit ausreichender Ressourcen zumindest mit einem ersten oder zweiten Kommunikationsgerät verbundene dritte Kommunikationsgeräte (101, 102) jeweils dafür konfiguriert, dass Datenströmen zugeordnete Datagramme jeweils in für Datenströme reservierte Sende-Queues (111-112, 121-122) eingereiht werden,
- die übergeordnete Kommunikationssteuerungseinrichtung (400) bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür konfiguriert, dass ausgewählten Datenströmen zugeordnete Datagramme jeweils in eine Sende-Queue (113, 123) für Datenverkehr eingereiht werden, der ohne spezifische Dienstgüte-Zusicherung behandelt wird.

2. Verfahren nach Anspruch 1,
bei dem die übergeordnete Kommunikationssteuerungseinrichtung (400) bei Verfügbarkeit ausreichender Ressourcen zumindest mit einem ersten oder zweiten Kommunikationsgerät (201, 202) verbundene dritte Kommunikationsgeräte (101, 102) jeweils dafür konfiguriert, dass die Datenströme jeweils einem virtuellen lokalen Netz zugeordnet und Datenströmen zugeordnete Datagramme (300) auf Basis dieser Zuordnung jeweils in die jeweilige für Datenströme reservierte Sende-Queues (111-112, 121-122) eingereiht werden, und bei dem die übergeordnete Kommunikationssteuerungseinrichtung (400) bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür konfiguriert, dass ausgewählte Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue (113, 123) für Datenverkehr eingereiht werden, der ohne spezifische Dienstgüte-Zusicherung behandelt wird.

3. Verfahren nach Anspruch 2,
bei dem durch die Zuordnung des virtuellen lokalen Netzes geändert wird, ob und/oder mit welcher Priorität einem Datenstrom zugeordnete Datagramme jeweils in eine für Datenströme reservierte Sende-Queue eingereiht werden.

4. Verfahren nach einem der Ansprüche 2 oder 3,
bei dem die übergeordnete Kommunikationssteuerungseinrichtung (400) während eines laufenden Betriebs des Kommunikationssystems zeit- und/oder ereignisgesteuert eine aktualisierte Priorisierung sämtlicher Datenströme erstellt und anhand der aktualisierten Priorisierung sowie auf Basis aktuell verfügbarer Ressourcen ermittelt, welche Datenströme zumindest temporär als ausgewählte Datenströme zu behandeln sind.

5. Verfahren nach einem der Ansprüche 2 bis 4,
bei dem die übergeordnete Kommunikationssteuerungseinrichtung (400) zumindest die mit einem ersten oder zweiten Kommunikationsgerät (201, 202) verbundenen dritten Kommunikationsgeräte (101, 102) während eines Betriebsstarts des Kommunikationssystems jeweils dafür konfiguriert, dass zunächst sämtliche Datenströme jeweils einem virtuellen lokalen Netz zugeordnet werden, anhand dessen Zuordnung dem jeweiligen ausgewählten Datenstrom zugeordnete Datagramme jeweils in die jeweilige Sende-Queue (113, 123) für Datenverkehr eingereiht werden, der ohne spezifische Dienstgüte-Zusicherung behandelt wird.

6. Verfahren nach Anspruch 5,
bei dem die übergeordnete Kommunikationssteuerungseinrichtung (400) nach dem Betriebsstart eine Priorisierung sämtlicher Datenströme erstellt und anhand der Priorisierung sowie auf Basis verfügbarer Ressourcen ermittelt, welche Datenströme zumindest temporär als ausgewählte Datenströme zu behandeln sind.

7. Verfahren nach einem der Ansprüche 1 bis 6,
bei dem die Datenstrom-Identifikatoren jeweils auf eine Reservierungsanfrage (401) eines ersten Kommunikationsgeräts (201) durch die übergeordnete Kommunikationssteuerungseinrichtung (400) an das jeweilige erste Kommunikationsgerät bereitgestellt werden.

8. Verfahren nach einem der Ansprüche 1 bis 7,
bei dem die Datenströme für eine Sende-Queue-Zuordnung ihrer Datagramme (300) jeweils durch ihren Datenstrom-Identifikator und ihre Zuordnung zu einem virtuellen lokalen Netz identifiziert werden, insbesondere entsprechend IEEE 802.1 CB.

9. Verfahren nach einem der Ansprüche 1 bis 8,
bei dem die übergeordnete Kommunikationssteuerungseinrichtung (400) zumindest die mit einem ersten oder zweiten Kommunikationsgerät (201, 202) verbundenen dritten Kommunikationsgeräte (101, 102) jeweils durch Einträge in eine jeweilige Forwarding Database dafür konfiguriert, welches virtuelle lokale Netz einem Datenstrom jeweils zugeordnet wird und/oder ob und/oder mit welcher Priorität einem Datenstrom zugeordnete Datagramme jeweils in eine für Datenströme reservierte Sende-Queue eingereiht werden.

10. Verfahren nach einem der Ansprüche 1 bis 9,
bei dem die durch insbesondere die dritten Kommunikationsgeräte (101-103) bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

11. Verfahren nach einem der Ansprüche 1 bis 10,
bei dem die Kommunikationsgeräte (101-103, 201-202) über ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden sind.

12. Verfahren nach Anspruch 11,
bei dem eine Weiterleitung der ausgewählten Datagramme (300) mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert wird.

13. Verfahren nach einem der Ansprüche 10 oder 11,
bei dem in den dritten Kommunikationsgeräten (101-103) jeweils zumindest für erste Datenströme mit erhöhten Echtzeitanforderungen reservierte Sende-Queues (111, 121), für zweite Datenströme ohne erhöhte Echtzeitanforderungen reservierte Sende-Queues (112, 122) und Sende-Queues (113, 123) für Datenverkehr ohne spezifische Dienstgüte-Zusicherung, insbesondere Best-effort Datenverkehr, vorgesehen sind, bei dem die übergeordnete Kommunikationssteuerungseinrichtung (400) zunächst nur für die ersten Datenströme bei ausreichender Verfügbarkeit Ressourcen zur Übermittlung des jeweiligen Datenstroms über die dritten Kommunikationsgeräte reserviert und die dritten Kommunikationsgeräte jeweils dafür konfiguriert, die zweiten Datenströme zumindest temporär als ausgewählte Datenströme zu behandeln.

14. Verfahren nach Anspruch 13,
bei dem die übergeordnete Kommunikationssteuerungseinrichtung (400) bei Verfügbarkeit ausreichender Ressourcen zur Übermittlung der ersten Datenströme über die dritten Kommunikationsgeräte (101-103) überprüft, ob zur Übermittlung der zweiten Datenströme ausreichende Ressourcen verfügbar sind, und die dritten Kommunikationsgeräte jeweils dementsprechend dafür konfiguriert, die den zweiten Datenströmen zugeordnete Datagramme in die für die zweiten Datenströme reservierten Sende-Queues (112, 122) einzureihen.

15. Kommunikationssteuerungseinrichtung mit
- zumindest einem Anschluss zur Verbindung mit einem Datagramme weiterleitenden Kommunikationsgerät,
- wobei die Kommunikationssteuerungseinrichtung (400) dafür ausgestaltet und eingerichtet ist, auf durch erste Kommunikationsgeräte (201) gesendete erste Datagramme (301) zur Bekanntmachung abonnierbarer Datenströme und auf durch zweite Kommunikationsgeräte (201) gesendete zweite Datagramme (302) zur Reservierung von durch dritte Kommunikationsgeräte (101-103) für eine Übermittlung der Datenströme bereitzustellenden Ressourcen jeweils einen Pfad für den jeweiligen Datenstrom zu ermitteln und bei ausreichender Verfügbarkeit Ressourcen zur Übermittlung des jeweiligen Datenstroms über die dritten Kommunikationsgeräte zu reservieren,
- wobei die Kommunikationssteuerungseinrichtung ferner dafür ausgestaltet und eingerichtet ist, bei Verfügbarkeit ausreichender Ressourcen zumindest mit einem ersten oder zweiten Kommunikationsgerät (201, 202) verbundene dritte Kommunikationsgeräte (101, 102) jeweils dafür zu konfigurieren, dass Datenströmen zugeordnete Datagramme (300) jeweils in für Datenströme reservierte Sende-Queues (111-112, 121-122) eingereiht werden,
- wobei die Kommunikationssteuerungseinrichtung ferner dafür ausgestaltet und eingerichtet ist, bei mangelnder oder unsicherer Verfügbarkeit ausreichender Ressourcen zumindest die mit einem ersten oder zweiten Kommunikationsgerät verbundenen dritten Kommunikationsgeräte jeweils zumindest temporär dafür zu konfigurieren, dass ausgewählten Datenströmen zugeordnete Datagramme jeweils in eine Sende-Queue (113, 123) für Datenverkehr eingereiht werden, der ohne spezifische Dienstgüte-Zusicherung behandelt wird.
